# EUROPEAN PATENT SPECIFICATION

(11) **EP 1 225 371 B1**
(45) Date of publication and mention of the grant of the patent: **07.06.2006**
(21) Application number: 01128181.3
(22) Date of filing: 27.11.2001
(51) Int. Cl.: F16H 61/00

(54) **Belt replacement timing annunciator for belt-type automatic transmissions**
Riemenwechselanzeige für automatische Keilriemengetrieben
Appareil indicateur de remplacement de la courroie d'une transmission automatique à courroie

(30) Priority: 15.01.2001 JP 2001007013
(43) Date of publication of application: 24.07.2002
(73) Proprietor: HONDA GIKEN KOGYO KABUSHIKI KAISHA, Minato-ku, Tokyo (JP)
(72) Inventor: Asumi, Michio, 4-1, Chuo 1-chome, Wako-shi, Saitama (JP); Komuro, Hirokazu, 4-1, Chuo 1-chome, Wako-shi, Saitama (JP); Ono, Yuuji, 4-1, Chuo 1-chome, Wako-shi, Saitama (JP)
(74) Representative: Prechtel, Jörg

(56) References cited:
- EP-A- 0 870 954
- WO-A-98/05886
- JP-U- 64 053 558
- US-A- 5 019 017
- PATENT ABSTRACTS OF JAPAN vol. 010, no. 246 (M-510), 23 August 1986 (1986-08-23) & JP 61 074950 A (TOYOTA MOTOR CORP), 17 April 1986 (1986-04-17)

## Description

The present invention relates to a belt replacement timing annunciator for informing the driver of being a right time to replace the endless belt in the automatic transmission in the belt-type automatic transmission mounted on the vehicle.

Hitherto, since the endless belt in the belt-type automatic transmission mounted on the vehicle is worn away by the contact with the pulley during operation, it is instructed to replace the endless belt when the integrated mileage of the vehicle exceeds a predetermined reference value in the service manual. A belt-type automatic transmission in which the change gear ratio of the automatic transmission is displayed on the meter panel is disclosed in Japanese Patent Laid-Open No.53558/1989. In the stepless variable power transmission system disclosed in this patent publication, a potentiometer for detecting the movement zone of the movable pulley that constitutes a drive pulley on which an endless belt is routed is provided and the output of the potentiometer is converted into the change gear ratio, and the change gear ratio is displayed on the change gear ratio display provided on the meter panel.

Another example of speed change ratio display device is provided by document JP 61 074950.

Since the actual extent of wear of the endless belt varies depending on the condition of usage of the vehicle differing from the timing of belt replacement based on the integrated mileage indicated in the service manual, a system that can indicate a further proper timing of replacement of the belt based on the actual wear of the endless belt has been desired.

The technology in the related art disclosed in the patent publication described above is a system that simply displays the actual change gear ratio of the stepless variable power transmission system, and the timing of replacement of the endless belt in relation to the gear ratio is not considered.

With such a circumstance in view, it is an object of the present invention to improve the maintainability of the vehicle by keeping track of the wear condition of the endless belt in the belt-type automatic transmission system mounted on the vehicle accurately and informing the driver of a right timing of replacement of the belt clearly.

The invention according to Claim 1 is a belt replacement timing annunciator for belt-type automatic transmission mounted on the vehicle and provided with an endless belt routed between the drive pulley connected to the output shaft of the engine and the driven pulley connected to the axle of the driving wheel, in which a change gear ratio is shifted by varying the wound radii of the endless belt around the drive pulley and around the driven pulley according to the operating conditions of the vehicle, further comprising operating condition detecting means for detecting a specific operating condition of the vehicle, change gear ratio detecting means for detecting the actual change gear ratio of the automatic transmission, determination means for determining in a specific operating condition described above that the endless belt is at a right timing to be replaced when the actual change gear ratio exceeds the reference change gear ratio set to the value larger than the predetermined change gear ratio in a specific operating condition, and display means for displaying the result of determination of the determination means.

According to the invention as set forth in Claim 1, the fact that wear condition of the endless belt may be identified by detecting the actual change ratio because the actual change gear ratio exceeds the predetermined change gear ratio in the same operating condition when wear of the endless belt of the belt-type automatic transmission progresses is utilized, and thus when the actual change gear ratio in a specific operating condition exceeds the reference change gear ratio that is larger than the predetermined change gear ratio, it is determined that wear of the endless belt progresses and thus it is a right time to replace the endless belt. Therefore, in contrast to the related art described above, the wear condition of the endless belt reflecting various operating conditions of the vehicle, which are difficult to identify from the integrated mileage, can be identified adequately, and thus a right timing to replace the belt can be determined. In addition, since the result of determination is displayed on the display means, the driver can easily and positively know the fact that it is a right time to replace the belt by viewing the display. As a consequent, the endless belt can be replaced at a right timing, and thus the maintainability of the vehicle is improved.

The invention according to Claim 2 is a belt replacement timing annunciator for belt-type automatic transmissions as set forth in Claim 1, wherein the determination means determines that the endless belt is at the right timing to be replaced when the condition that the actual change gear ratio exceeds the reference change gear ratio continued for a prescribed time period.

According to the invention according to Claim 2, the fact that the belt is at the right timing to be replaced is displayed on the display means when the condition that the actual change gear ratio exceeds the reference change gear ratio continued for a prescribed time period. Therefore, determination of a right timing of belt replacement based on the change gear ratio resulted in temporary variations in change gear ratio caused by variations and the like in operating conditions of the vehicle is prevented, and thus reliable determination of a right timing of belt replacement is realized.

The invention according to Claim 3 is a belt replacement timing annunciator for belt-type automatic transmissions as stated in Claim 1 or Claim 2, further comprising integrated mileage measuring means for measuring the integrated mileage of the vehicle, wherein the determination means determines that the endless belt is at a right timing to be replaced when the actual change gear ratio exceeded the reference change gear ratio or when the integrated mileage exceeded the predetermined reference distance.

According to the invention as set forth in Claim 3, since the fact that the belt is at the right timing to be replaced is displayed on the display means based on the result of either one of the determination of a timing of belt replacement based on the change gear ratio and that based on the integrated mileage, which is made earlier, a right timing of belt replacement may be determined according to the operating conditions including the integrated mileage of the vehicle, and what is more, a display indicating that the belt is at a right timing to be replaced appears on the common display means irrespective of the fact that the determinations of the timing of replacement are made based on the different criterion such as the change gear ratio and the integrated mileage. Therefore, the driver can easily recognize a right timing of belt replacement and thus the maintainability is improved.

The invention according to Claim 4 is a belt replacement timing annunciator for belt-type automatic transmissions as set forth in any one of Claim 1 to Claim 3, wherein the reference change gear ratio is determined based on the minimum predetermined change gear ratio.

According to the invention as set forth in Claim 4, the reference change gear ratio is determined based on the minimum predetermined change gear ratio that is determined in the operating conditions in which the effect of variations in operating condition of the vehicle on the predetermined change gear ratio is smaller than the operating conditions at other predetermined change gear ratios, and the actual change gear ratio is detected in that operating condition. Therefore, more accurate change gear ratio can be detected and thus more reliable determination of the timing of belt replacement is realized.

Referring now to Fig. 1 to Fig. 6, an embodiment of the present invention will be described.
Fig. 1 is a plan view in cross section of the power unit having an internal combustion engine and the belt-type automatic transmission to which the present invention is applied.
Fig. 2 is a power unit in Fig. 1 viewed from the left side with the belt-type automatic transmission and a cover unit removed.
Fig. 3 is a cross sectional view taken along the line III-III of Fig. 1.
Fig. 4 is a graph showing transmission properties of the belt-type automatic transmission shown in Fig. 1.
Fig. 5 is a front view of the instrument panel for motorcycles on which the power unit shown in Fig. 1 is to be mounted.
Fig. 6 is a flow chart of the belt replacement timing determination routine of the belt replacement timing annunciator.

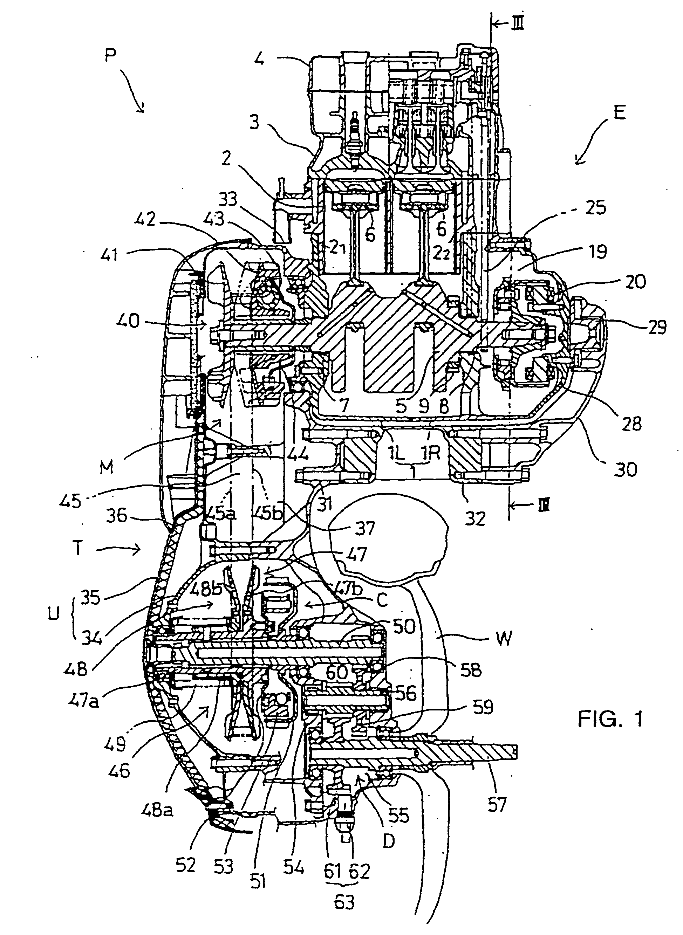

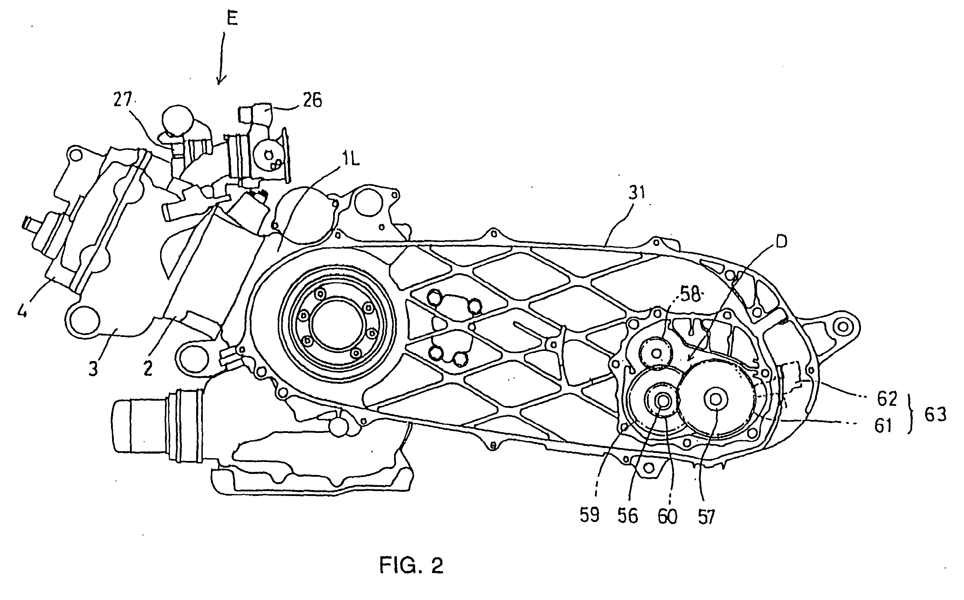

Referring to Fig. 1 and Fig.2, a power unit P comprising an internal combustion engine E, which is an engine, and a transmission system T including a belt-type automatic transmission M, a starting clutch C, and a decelerator D formed into a single unit is mounted on the motorcycle, which is not shown in the figure, horizontally with the crankshaft 5 is laterally oriented. The internal combustion engine E comprises a engine body including a cylinder bock 2, cylinder head 3, and a head cover 4 superimposed in sequence on the crankcase 1 that can be divided into the left and the right halves, and formed into one unit by integrating all these four components together, and placed on the vehicle body in a forwardly tilted state in which the cylinders 2₁, 2₂ are faced toward the upper front.

In this specification, the terms "front, rear, left and right" mean the "front, rear, left and right" on the basis of the vehicle body.

The transmission system T disposed on the left side of the vehicle body is, as will be described later, supported so as to be capable of swinging vertically with respect to the internal combustion engine E by being supported by the crankcase 1 with the axis of rotation of the crankshaft 5 as a center of swinging motion so as to be capable of swinging, and by being rotatably supported at the rear end portion thereof by the rear portion of the vehicle body via a shock absorber. A rear wheel W, which is a drive wheel, is supported at the rear portion of the transmission system T with a shaft.

The internal combustion engine E is two-cylinder, four-cycle internal combustion engine, in which reciprocating movements of the pistons 6 slidably fitted into two cylinders 2₁, 2₂ of the cylinder block 2 are transmitted via a con'rod to the crankshaft 5, that is an output shaft rotatably supported by the crankcase 1 via a pair of left and right main bearings 7, 8, so that the crankshaft 5 is rotated.

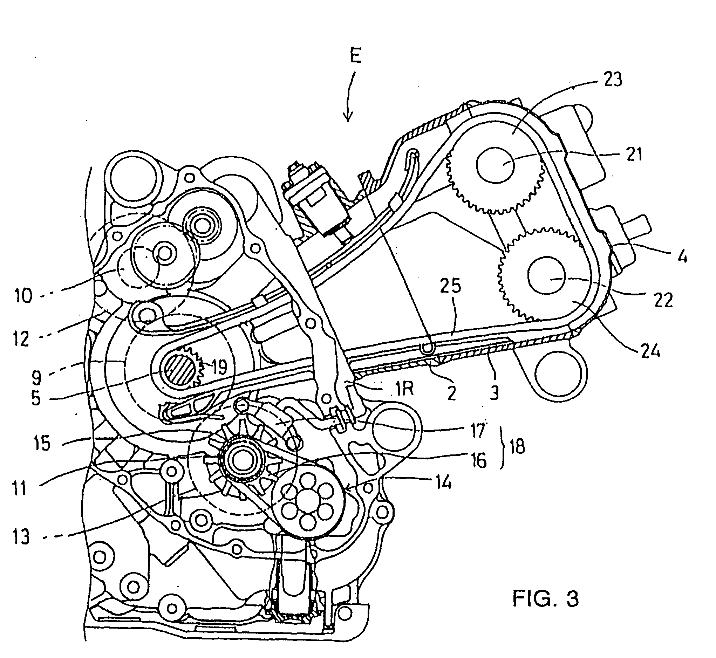

The crankshaft 5 is provided with a drive gear 9 at the position adjacent to the right main bearing 8 on the left side thereof, and as shown in Fig. 3, the drive gear 9 engages with the driven gears 12, 13 provided on a pair of balancer shafts 10, 11 disposed above and below the crankshaft 5, so that both of the balancer shafts 10, 11 rotate in the reverse directions with respect to each other at the same speed as the crankshaft 5. A pump driving pulley 15 for driving an oil pump 14 and a pulsar rotor 16 having a plurality of projection on the outer periphery thereof are connected to the right end portion of one of the balancer shaft 11, and a pick-up 17 is disposed at the position radially outwardly of the pulsar rotor 16 and opposed to the projection, so that the pulsar rotor 16 and the pick-up 17 constitute the revolution sensor 18 for detecting the number of revolution of the crankshaft 5, in other words, the number of engine revolutions N via the balancer shaft 11.

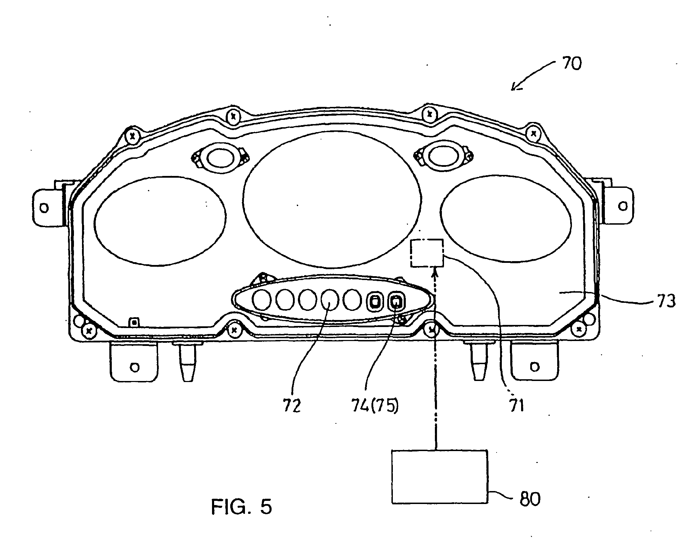

In addition, there are provided a drive sprocket 19 on the right end portion of the crankshaft 5 projecting rightward of the right main bearing 8 and a AC generator 20 on the right thereof, and there is provided a drive pulley 40 of the automatic transmission M at the left end portion of the crankshaft 5 projecting leftward of the left main bearing 7. A timing chain 25 is routed around the drive sprocket 19, and cam sprockets 23, 24 interlocked with the intake camshaft 21 and an exhaust camshaft 22 (See Fig. 3) that are components of the motion valve mechanism provided on the cylinder head 3 respectively, and two intake valves and two exhaust valves provided correspondingly to the cylinders 2₁, 2₂ are operated at prescribed opening and closing timings by the action of cams respectively formed on both of the camshafts 23, 24 rotated by the power of the crankshaft 5 transmitted via the timing chain 25. Then fuel injected from the fuel injection valve 27 to the intake passage by the amount of injection determined based on each detected signals from the revolution sensor 18, a opening sensor 26 for detecting the opening of the throttle valve, a pressure sensor for detecting the pressure of the intake passage, a temperature sensor for detecting the temperature of cooling water, and the like to be supplied to the electronic control unit (ECU) 80 (See Fig. 5) of the fuel injection control unit is mixed with air sucked through the throttle valve and sucked into the combustion chamber through the intake valve, and then ignited by the ignition plug and burned. The burned gas drives the piston 6 by its combustion pressure, and is discharged through the exhaust valve to the exhaust passage.

A right case 30 is rotatably supported on the supporting shaft 29 being fixed to the generator cover 28 joined to the right crankcase 1R. The right case 30 is joined to the connecting member 32 disposed along the rear surface of the right crankcase 1R, and a left case 31 is joined to the connecting member 32, so that the right case 30 and the left case 31 are integrally joined via the connecting member 32. The left case 31 is rotatably supported by an annular supporting member 33 connected to the left wall of the left crankcase 1L so as to surround the crankshaft 5. The left case 31 is opened toward the left side, and the opened portion is covered by the cover unit U of dual structure having an inner cover 34 and an outer cover 35, and a sound absorption member 36 is adhered on the inner surface of the outer cover 35. Then, the automatic transmission M, the starting clutch C, and the decelerator D for transmitting the power of the crankshaft 5 to the rear wheel W are stored in the transmission chamber 37 constructed of the left case 31 and the cover unit U, whereby the transmission system T is capable of swinging freely with respect to the crankcase 1.

The automatic transmission M comprises a drive pulley 40 of variable diameter, a driven pulley 46 of variable diameter, and an endless belt 45 formed for example of a V-belt routed around both pulleys 40, 46. The drive pulley 40 comprises a fixed pulley strip 41 fixed so as not to move in the axial direction and in the direction of rotation with respect to the crankshaft 5 and having a conical surface with which one side surface 45a of the endless belt 45 is brought into contact, and a movable pulley strip 42 joined so as to be capable of moving in the axial direction but not in the direction of rotation with respect to the crankshaft 5 and having a conical surface with which the other side surface 45b of the endless belt 45 is brought into contact, and is provided with a plurality of weight rollers 43 for moving the movable pulley strip 42 in the radial direction along the back surface of the movable pulley strip 42 by the action of a centrifugal force generated by the rotation of the drive pulley 40 to move the movable pulley strip 42 in the direction of axis, and a lamp plate 44 having guiding surfaces for guiding the radial movement of the weight roller 43 as a driving mechanism for the movable pulley strip 42.

On the other hand, the driven pulley 46 is provided on the left portion of the driven shaft 50 oriented laterally of the motorcycle. The right end portion of the driven shaft 50 is rotatably supported by the left case 31, and the intermediate portion thereof is rotatably supported by a mission cover 54, which will be described later. In addition, the driven pulley 46 comprises a fixed pulley strip 47 that is fixed with respect to the driven shaft 50 but rotatable, and a movable pulley strip 48 that is movable with respect to the fixed pulley strip 47 in the axial direction, and is provided with a spring 49 for urging the movable pulley strip 48 toward the fixed pulley strip 47 as a driving mechanism for the movable pulley strip 48. The fixed pulley strip 47 comprises an inner sleeve 47a rotatably supported on the outer periphery of the driven shaft 50, and a conical plate 47b fixed to the inner sleeve 47a and having a conical surface with which the other side surface 45b of the endless belt 45 is brought into contact. The inner sleeve 47b is rotatably supported by the inner cover 34 at its left end portion. On the other hand, the movable pulley strip 48 comprises an outer sleeve 48a fitted on the outer periphery of the inner sleeve 47a so as to be capable of sliding in the axial direction, and a conical plate 48b fixed on the outer sleeve 48a and having a conical surface with which one side surface 45a of the endless belt 45 is brought into contact.

On the driven shaft 50, a starting clutch C comprising a centrifugal clutch is provided between the fixed pulley strip 47 and the mission cover 54 forming a mission chamber 55 for storing the decelerator D that will be described later. The starting clutch C comprises a clutch outer 51 formed in the shape of a bowl and rotating integrally with the driven shaft 50, and a drive plate 52 disposed inside of the clutch outer 51 and rotating integrally with the fixed pulley strip 47. When the driven pulley 46 rotates at the number of revolutions exceeding the predetermined number of revolutions for starting linkage, a plurality of clutch shoes 53 supported by the drive plate 52 so as to be capable of swinging motion swing radially outwardly by the action of a centrifugal force against a spring force of the clutch spring and abut against the inner peripheral surface of the clutch outer 51, so that the starting clutch C is brought into a connected state and thus the rotation of the driven pulley 46 is transmitted to the driven shaft 50.

The driven shaft 50 is drivingly joined to the rear axle 57 on which the rear wheel W is mounted via the decelerator D having a speed reducing gear train. In other words, in the rear portion of the transmission chamber 37, a mission chamber 55 defined by the rear portion of the left case 31 and a mission cover 54 that is disposed between the rear portion of the left case 31 and the starting clutch C is provided, and the decelerator D stored in the mission chamber 55 comprises a first gear 58 of small diameter provided on the right end portion of the driven shaft 50, a second gear 59 of a large diameter and a third gear 60 of a small diameter provided on the intermediate shaft 56 rotatably supported by the left case 31 and the mission cover 54, and a fourth gear 61 of large diameter provided on the rear axle 57 rotatably supported by the left case 31 and the mission cover 54. The first gear 58 engages the second gear 59, and the third gear 60 engages the fourth gear 61, and thus the rotation of the driven shaft 50 is decelerated to the second gear and transmitted to the rear axle 57.

The left case 31 is provided with a pick-up 62 at the position radially facing toward the teeth of the fourth gear 61 mounted on the rear axle 57, and the fourth gear 61 as a pulsar rotor and the pick-up 62 constitute a revolution sensor 63 for detecting the number of revolutions of the driven shaft 50, that is, the number of revolutions of the driven pulley 46 in a state in which the starting clutch C is in a completely connected state via the rear axle 57 and the intermediate shaft 56. Since the revolution sensor 63 detects the number of revolutions after gear change is made by the automatic transmission M, it also serves as a vehicle velocity sensor for detecting the vehicle velocity V of the motorcycle.

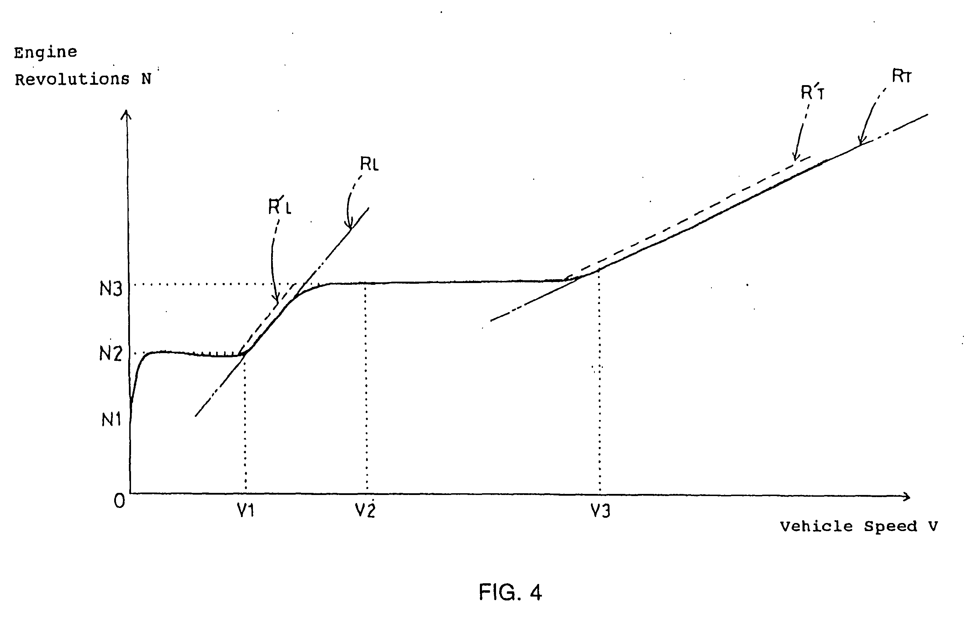

Referring now to Fig. 4, which is a graph showing the transmission properties in a state in which a new endless belt 45, or an endless belt 45 that is little worn and has the same change gear ratio as that of the new endless belt is used in the transmission system T thus constructed, the change-gear action of the automatic transmission M will be described. When the internal combustion engine E is operated and the number of engine revolutions N is not more than the first predetermined number of revolutions N1, the starting clutch is in the disconnected state and thus the motorcycle is immobilized state because the number of revolutions of the driven pulley 46 is not more than the number of revolutions for starting linkage. At this moment, at the drive pulley 40, a centrifugal force of the weight roller 43 is not as large as it can move the movable pulley strip 42 in the axial direction since the number of engine revolutions N is low, and thus the movable pulley strip 42 is away from the fixed pulley strip 41, and the radius of the endless belt 45 wound thereon is minimized. On the other hand, at the driven pulley 46, the movable pulley strip 48 urged by the spring 49 is close to the fixed pulley strip 47, and the radius of the endless belt 45 wound thereon is maximized. Therefore, the power of the crankshaft 5 is transmitted to the driven pulley 46 at the maximum change gear ratio R_{L}.

When the throttle valve is gradually opened and the number of engine revolutions N slightly exceeds the first predetermined number of revolutions N1, the number of revolutions of the driven pulley 46 exceeds the number of revolutions for starting linkage, and the clutch shoe 53 swings by the action of a centrifugal force and is brought into contact with the clutch outer 51. Consequently, the power of the crankshaft 5 is started to be transmitted to the driven shaft 50 and then to the rear axle 57 via the decelerator D, and the motorcycle starts moving. When the number of engine revolutions N further increases and reaches the second prescribed number of engine revolutions N2, the vehicle velocity V increases in a state where the start clutch C is at a half clutch position and in a state in which the number of engine revolutions N is almost constant at more or less the second predetermined number of revolutions N2, and the start clutch C is completely linked with the vehicle velocity V being near the first vehicle velocity V1, the power of the crankshaft 5 is transmitted to the driven shaft 50 at the maximum change gear ratio R_{L}.

The power of the crankshaft 5 is shifted at this predetermined constant maximum change gear ratio R_{L} and transmitted to the driven shaft 50 in the operating state of motorcycle corresponding to the low rotational region or the low vehicle velocity region until the number of engine revolutions N reaches the third predetermined number of revolutions N3 from the second predetermined number of revolutions N2 or until the vehicle velocity V reaches the second vehicle velocity V2, and then transmitted to the rear axle 57 via the decelerator D, so that the motorcycle travels at the vehicle velocity V in proportion with the number of engine revolutions N.

When the throttle valve is further opened and the number of engine revolutions N slightly exceeds the third predetermined number of revolutions N3, at the drive pulley 40, the movable pulley strip 42 is moved in the axial direction by the weight roller 43 that moves radially of the movable pulley strip 42 by the action of a centrifugal force toward the fixed pulley strip 41, and the radius of the endless belt 45 wound thereon gradually increases. On the other hand, at the driven pulley 46, the movable pulley strip 48 moves in the axial direction away from the fixed pulley strip 47 while compressing the spring 49 against a spring force of the spring 49, and the radius of the endless belt 45 wound thereon gradually decreases. As a consequent, the change gear ratio is automatically changed in a state in which the number of engine revolutions N is almost constant at more or less the third predetermined number of revolutions N3, and the vehicle velocity V increases.

When the weight roller 43 abuts against the stopper provided on the back surface of the movable pulley strip 42 and the radial movement thereof is disturbed at the vehicle velocity V near the third vehicle velocity V3, the radius of the endless belt 45 wound around the drive pulley 40 is maximized, and the radius of the endless belt 45 wound around the driven pulley 46 is minimized, and a constant minimum change gear ratio R_{T} is determined. At this time, the opening of the throttle valve is large, and the power of the crankshaft 5 is shifted at this minimum change gear ratio R_{T} and transmitted to the driven shaft 50 in the operating state of the motorcycle corresponding to the third predetermined number of revolutions N3 that is the operating region in which the throttle valve is further opened to the fully opened state or to the high revolution region or the high vehicle velocity region hither than the third vehicle velocity V3, and then transmitted to the rear axle 57 via the decelerator D, so that the motorcycle travels at the vehicle velocity V in proportion to the number of engine revolutions N.

When the endless belt 45 that comes into contact with the drive pulley 40 and the driven pulley 46 wears on both side surfaces 45a, 45b that are the areas coming into contact with both pulleys, and the width of the endless belt 45 gradually decreases as a result of long term use of the motorcycle, the actual change gear ratio increases. In other words, with the same number of engine revolutions N, when the width of the endless belt 45 decreases due to wear, the radius of the endless belt 45 wound around the drive pulley 40 that has a movable pulley strip 42 to be pressed by the weight roller 43 decreases in comparison with the state in which no wear is occurred. On the other hand, at the driven pulley 46 having a movable pulley strip 48 on which a spring force of the spring 49 is exerted, the radius of the endless belt 45 wound thereon increases from the condition in which no wear is occurred, and thus the actual change gear ratio increases gradually from the change gear ratio in the condition that the new endless belt 45 or the endless belt 45 with little wear is used as wear progresses. Therefore, even under the operating condition of the motorcycle in which the maximum change gear ratio R_{L} and the minimum change gear ratio R_{T} can be obtained, the change gear ratios will be the constant values R'_{L}, R'_{T} larger than those as shown by dotted lines in Fig. 4.

Therefore, a belt replacement timing annunciator for automatic transmissions M is provided on the motorcycle in order to keep track of the wear condition of the endless belt 45 by detecting the actual change gear ratio R of the automatic transmission M and simultaneously to keep track of the wear condition of the endless belt 45 from the integrated mileage L to visually inform the driver of the fact that the wear of the endless belt 45 progresses and thus the endless belt 45 is at a right timing to be replaced adequately and clearly.

The belt replacement timing annunciator comprises change gear detecting means for detecting the actual change gear ratio R, operating condition detecting means for detecting the operating condition of the motorcycle, determination means for determining a timing of replacement, and display means for informing the driver of the fact that the endless belt 45 is at a right timing to be replaced based on the result of determination of the determination means.

The change gear ratio detecting means comprises a revolution sensor 18 and a revolution sensor 63 both constituting the number of revolutions detecting means, and calculating means for calculating the actual change gear ratio R based on the detected signals from the revolution sensors 18, 63. As seen from the change gear properties of the automatic transmitter M shown in Fig. 4, since the maximum change gear ratio R_{L} and the minimum change gear ratio R_{T}, which are constant stable change gear ratios in which the number of engine revolutions N and the vehicle velocity V are in direct proportion, can be obtained when the motorcycle is in a specific operating condition, it is preferable to detect the change gear ratio R in the operating condition in which the constant change gear ratio can be obtained in order to determine the wear condition of the endless belt 45 precisely from the actual change gear ratio R. Therefore, based on the opening of the throttle valve detected by the opening sensor 26 and the vehicle velocity V detected by the revolution sensor 63 that also serves as a vehicle velocity sensor, the calculating means is used here to calculate the change gear ratio R in the operating condition in which the minimum change gear ratio R_{T} can be obtained. The reason is that the high rotation region or the high vehicle velocity region, which is the operating condition of the motorcycle predetermined as the minimum change gear ratio R_{T}, is the operating conditions in which the effect on the change gear ratio resulted from variations in the operating conditions of the motorcycle is less than the operating conditions in which the maximum change gear ratio R_{L} is determined.

Referring to Fig. 5, the instrument panel 70 of the motorcycle comprises a microcomputer 71 for processing the signals from various sensors, calculating the vehicle velocity V, the number of engine revolutions N, the integrated mileage L, and the like, and displaying them on the various meters. Among others, the function for calculating the integrated mileage L in the microcomputer 71 corresponds to the integrated mileage measuring means. The instrument panel 70 is provided, as display means, with the display lamp 72 formed of a light-emitting diode that is turned on when the endless belt 45 is determined to be at a right timing to be replaced by the determination means for informing the driver of the fact that the endless belt 45 is at the right timing to be replaced. Furthermore, a lens 73 of the instrument panel 70 is provided with a push-button switch 74 for setting the time of the day on the clock being integrated in the instrument panel 70.

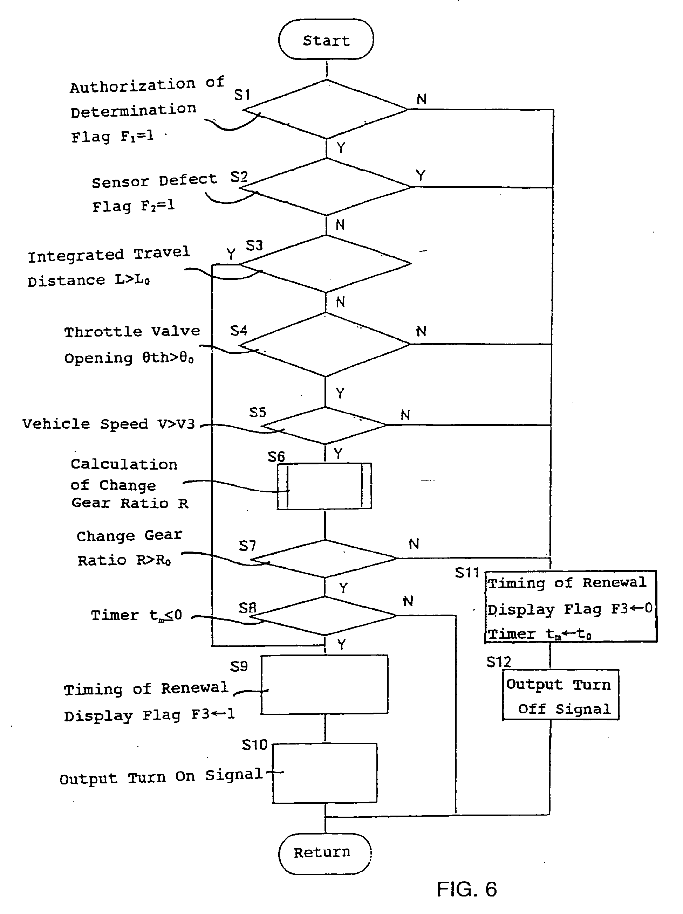

Referring now to the flow chart of the belt replacement timing determination routine in Fig. 6, the operation of the belt replacement timing annunciator will be described. A series of processes in this routine is repeatedly performed at intervals of predetermined time period by the electronic control unit 80 as control means.

In Step S1, whether the determination authorizing flag F₁ for deciding the initiation of determination of the belt replacement timing is "1" or not is determined. The determination authorizing flag F₁ is set to "1" when a predetermined time period has passed after the ignition switch is turned ON and the internal combustion engine E is actuated, for example, after a few seconds has passed, and when the predetermined time period have not passed, it is set to "0". When the predetermined time period has not passed, it goes to Step S11, where the replacement timing display flag F₃ for showing that the endless belt 45 is at the right timing to be replaced is set to "0", and the timer tₘ is set to the predetermined time period tₒ. Subsequently, in Step S12, the extinction signal for turning OFF the display lamp 72 that indicates that the endless belt 45 is at the right timing to be replaced is supplied, and the routine terminates. On the other hand, when the predetermined time period has passed, it goes to Step S2.

In Step S2, whether or not any failure occurred in both revolution sensors 18, 63 and the opening sensor 26 is determined. When the sensor failure flag F₂ is "1", and a failure occurred in any one of the sensor, it goes to Step S11, S12, and when the sensor failure flag F₂ is "0", and no failure occurred in any sensor, it goes to Step S3.

In Step S3, whether of not the integrated mileage L measured by the integrated mileage measuring means exceeded the reference distance L₀ that requires replacement of the endless belt 45 is determined. When it is not more than the reference distance L₀, it goes to Step S4, and when it exceeds the reference distance L₀, it goes to Step S9 and the timing of replacement display flag F3 that indicates that the endless belt 45 is at the right timing to be replaced is set to "1", and subsequently, in Step S10, the illuminating signal that illuminate the display lamp 72 is supplied, and this routine terminates.

In Steps S4 and S5, whether or not the operating condition of the motorcycle is the operating condition in which the change gear ratio is at the minimum change gear ratio R_{T} is determined. In other words, in Step S4, whether or not the opening θ_{TH} of the throttle valve is larger than the predetermined opening θₒ, at which the throttle valve is highly opened, is determined. When it is larger than the predetermined opening θₒ, it goes to Step S5, and whether or not the vehicle velocity V is larger than the predetermined third vehicle velocity V3, which is a high vehicle velocity, is determined, and when it is higher than the third vehicle velocity V3, it goes to Step S6. On the other hand, when the determination in Step S4 or Step S5 is No, it goes to Step S11 in either cases, and then to Step S12 to complete the routine. Then the functions in both steps S4, S5 that are carried out in the electronic control unit 80 correspond to the operating state detecting means for detecting the specific operating condition described above.

In Step S6, the proportion between the number of revolutions of the drive pulley 40 (the number of engine revolutions N) detected by the revolution sensor 18, and the number of revolution of he driven pulley 46 detected by the revolution sensor 63, that also serves as a vehicle velocity sensor is calculated, and the actual change gear ratio R is calculated. Accordingly, the actual change gear ratio R is detected. Therefore, the function carried out in the electronic control unit 80 in Step S6 corresponds to the calculating means. Thereafter, it goes to Step S7 and whether or not the wear condition of the endless belt 45 progresses and it is a right timing to replace it is determined. In other words, since the change gear ratio increases as wear progresses as described above, whether or not the change gear ratio R calculated in Step S6 is larger than the reference change gear ratio Rₒ that is set to the value larger than the minimum change gear ratio R_{T} by a predetermined value corresponding to the wear condition that requires replacement of the endless belt 45 with respect to the minimum change gear ratio R_{T} obtained when the endless belt 45 is new or when the endless belt 45 is little worn and the same change gear ratio as that of the new endless belt 45 is obtained in the operating conditions described above is determined, and when the result of determination is No, it is determined that the extent of wear is not as much as it requires replacement and thus it is not at the right timing to be replaced, and then it goes to Step S11 and S12.

On the other hand, when it is determined that the change gear ratio R is larger than the reference change gear ratio Rₒ, and that the endless belt 45 is at the right timing to be replaced, the result of determination in Step S7 is Yes, and it goes to Step S8, where the timer tₘ that is set to the prescribed time period tₒ starts counting down. When the time is not up, the routine is terminated once, and the processes from Step S1 to Step S8 are carried out respectively in the next routine. When the time being counted by the timer tₘ is up in the Step S8, it goes to Step S9, and the value "1" is set to the replacement timing display flag F₃, which indicates that the endless belt 45 is at the right timing to be replaced. In subsequent Step S10, a signal to illuminate the display lamp 72 is supplied, and the routine terminates. The reason why the timer tₘ is provided here is to prevent determination of the right timing of belt replacement from being made based on the change gear ratio R resulted in temporary variations in change gear ratio due to variations in operating condition or the like of the motorcycle, and to enhance the reliability of determination of the right timing to replace the endless belt 45.

The functions carried out in the electronic control unit 80 in Steps S7, S8, S9, and S10 correspond to the first determination means for determining that the belt is at the right timing to be replaced based on the actual change gear ratio R, and the functions carried out in the electronic control unit 80 in Steps S3, S9, and S10 correspond to the second determination means for determining that the belt is at a right timing to be replaced based on the integrated mileage L.

Here, data of the integrated mileage L and the timing of replacement display flag F₃ set in the step S9 are both stored in the non-volatile memory of the microcomputer 71 provided on the instrument panel 70. Therefore, the timing of replacement display flag F₃ and data of the integrated mileage L are not reset even when the buttery to be mounted on the motorcycle is replaced, and will not be deleted unless the reset operation that will be described later is made. As a consequent, when the timing of replacement display flag F₃ is set to "1", the display lamp 72 is always illuminated as far as the ignition switch is in the ON state. The resetting operation can be made by turning the ignition switch from OFF to ON with the reset switch 75 that also serves as the switch 74 pressed, and keeping the reset switch 75 pressed for a predetermined time period, for example, longer than several seconds. By performing this resetting operation, the timing of replacement display flag F₃ and data of the integrated mileage L are reset, and the timing of replacement display flag F3 is set to "0" and the display lamp 72 is turned off.

Operations and effects of the belt replacement timing annunciator in such construction will now be described. When the actual change gear ratio R of the belt-type automatic transmission M is detected and the actual change gear ratio R exceeds the reference change gear ratio Rₒ, which is preset to the value larger than the minimum change gear ratio R_{T} by a prescribed value based on the minimum change gear ratio R_{T,} in the operating conditions in which the throttle valve set to the minimum change gear ratio R_{T}, which is a constant change gear ratio, is highly opened, and the number of engine revolutions N is in the high revolution region, or the vehicle velocity v is in the high vehicle velocity region, it is determined that wear of the endless belt 45 progresses and the belt is at the right timing to be replaced. As a consequent, differing from the related art, the wear condition of the endless belt 45 reflecting various operating modes of the vehicle, which difficult to identify from the integrated mileage L, can be correctly identified, and thus a right timing of belt replacement can be determined. In addition, since the result of determination is displayed on the display lamp 72, the driver is able to know that the belt is at the right timing to be replaced easily and positively by viewing the display lamp 72, and thus the endless belt 45 can be replaced at the right timing, thereby increasing maintainability of the motorcycle.

In addition, since the reference change gear ratio Rₒ is set based on the minimum change gear ratio R_{T} that is determined in the high revolution region or the high vehicle velocity region in which the effect on the predetermined change gear ratio resulted from variations in the operating conditions of the motorcycle is less than the operating conditions with other predetermined change gear ratios, and the actual change gear ratio R is detected in this operating state, more accurate change gear ratio can be detected and thus more reliable determination of the timing of belt replacement can be made.

In addition, since the moment when the first determination means determines that the belt is at the right timing to be replaced is when a state in which the actual change gear ratio R exceeds the reference change gear ratio Rₒ continued for the predetermined period of time tₒ until the time period preset to the timer tₘ is up, the timing of belt replacement is prevented from being determined based on the change gear ratio R due to temporary variations in change gear ratio resulted from variations in the operating conditions of the motorcycle and the like, whereby reliable determination of the right timing of belt replacement can be made.

Since the display lamp 72 that indicates that the belt is at the right timing to be replaced is turned on based on the result of either one of determination made by the first determination means for determining that the belt is at the right timing to be replaced based on the actual change gear ratio R or determination made by the second determination means for determining that the belt is at the right timing to be replaced based on the integrated mileage L, which is made earlier, a right timing of belt replacement may be determined according to the operating conditions including the integrated mileage L of the motorcycle, and what is more, a display indicating that the belt is at a right timing to be replaced appears on the common display lamp 72 irrespective of the fact that the determinations of the timing of replacement are made based on the different criterion such as the change gear ratio R and the integrated mileage L. Therefore, the driver can easily recognize a right timing of belt replacement and thus the maintainability is improved.

In addition, since the timing of replacement display flag F₃ and data of integrated mileage L are stored in the non-volatile memory, they are not reset even when the battery is replaced, and thus the display lamp 72 that was turned on once when the timing of replacement display flag F₃ became "1" is always illuminated when the ignition switch is ON. Furthermore, as is described above, since the reset operation of the timing of replacement display flag F₃ and data of the integrated mileage L must be done by the driver fairly consciously, the illuminated display lamp 72 cannot be turned off easily, and thus the driver is able to be aware positively of the fact that the belt is at the right timing to be replaced.

Since the actual change gear ratio R can be detected by the use of the revolution sensor 18 for detecting the number of engine revolutions N to be supplied to the electronic control unit 80 for controlling the amount of fuel injection and the revolution sensor 63 that also serves as a vehicle velocity sensor, it is not necessary to provide a change gear ratio detecting means separately, and thus increase in the number of components may be prevented, and the cost may be reduced.

An embodiment in which the structure of a part of the embodiment described above is modified will be described in conjunction with the modified structures.

In the embodiment described above, the reference change gear ratio Rₒ that is determined based on a constant predetermined change gear ratio in a specified operating condition of the vehicle is determined based on the minimum change gear ratio R_{T}. However, it may be determined based on the maximum change gear ratio R_{L}. It is also possible to use the revolution sensor 18 instead of the opening sensor 26 for detecting the operating conditions in which the minimum change gear ratio R_{T} or the maximum change gear ratio R_{L}.

In the embodiment describe above, the driver is impressed with the fact that the belt is at the right timing to be replaced by the use of the display lamp 72. However, it is also possible to turn on the display lamp 72 at the moment when the belt is determined to be at the right timing to be replaced, and to lower the output of the internal combustion engine E by ignition time control or the fuel injection control so that the driver further recognizes that the belt replacement is necessary.

The engine used in the embodiment described above was an internal combustion engine E. However, it may be a motor other than the internal combustion engine, and the vehicle may be a vehicle other than the motorcycle. In the embodiment described above, the automatic transmission has the minimum change gear ratio R_{T} and the maximum change gear ratio R_{L} as a constant change gear ratio. However, it may be the automatic transmission having an intermediate change gear ratio, which is a constant change gear ratio of the value between both of the change gear ratios R_{T} and R_{L}.

The invention improves the maintainability of the vehicle by identifying the wear conditions of the endless belt correctly and informing the driver of the right timing of belt replacement clearly in the belt-type automatic transmission mounted on the vehicle.

To achieve this, the belt replacement timing annunciator of the belt-type automatic transmission in which the radii of the endless belt wound around the drive pulley and around the driven pulley vary to shift the change gear ratio comprises operating conditions detecting means S4, S5 for detecting a specific operating condition of the vehicle, change gear ratio detecting means S6 for detecting the actual change gear ratio R of the automatic transmission, determination means S7-S10 for determining that the endless belt is at the right timing to be replaced when the state in which the change gear ratio R exceeds the reference change gear ratio Rₒ set to the value larger than the predetermined change gear ratio has continued for a predetermined time period tₒ, and display means for displaying the result of determination.

## Claims

1. A belt replacement timing annunciator for a belt-type automatic transmission (T) mounted on the vehicle and provided with an endless belt (45) routed between the drive pulley (15) connected to the output shaft of the engine and the driven pulley (46) connected to the axle of the driving wheel, wherein a change gear ratio is shifted by changing the radii of the endless belt (45) wound around the drive pulley (15) and wound around the driven pulley (46) according to the operating conditions of the vehicle, further comprising operating condition detecting means (S4, S5) for detecting the specific operating condition of the vehicle, change gear ratio detecting means (S6) for detecting the actual change gear ratio (R) of the automatic transmission, determination means (S7-S10) for determining that the endless belt (45) is at a right timing to be replaced when the actual change gear ratio (R) exceeds a reference change gear ratio (R₀) predetermined to a value that is larger than a predetermined change gear ratio (R_{T}) in the specific operating condition, and display means (72) for displaying the result of determination of the determination means (S7-S10).

2. A belt replacement timing annunciatior for a belt-type automatic transmission (T) as set forth in Claim 1, wherein the determination means (S7-S10) determines that the endless belt (45) is at the right timing to be replaced when the condition that the actual change gear ratio (R) exceeds the reference change gear ratio (R₀) continued for a prescribed time period (t₀).

3. A belt replacement timing annunciatior for a belt-type automatic transmission (T) as stated in Claim 1 or Claim 2, further comprising integrated mileage measuring means (S3) for measuring the integrated mileage of the vehicle, wherein the determination means (S7-S10) determines that the endless belt (45) is at a right timing to be replaced when the actual change gear ratio (R) exceeded the reference change gear ratio (R₀) or when the integrated mileage (L) exceeded a reference distance (L₀).

4. A belt replacement timing annunciator for a belt-type automatic transmission (T) as set forth in any one of Claim 1 to Claim 3, wherein the reference change gear ratio (R₀) is determined based on the minimum predetermined change gear ratio (R_{T}).

## Patentansprüche

1. Riemenwechselzeitanzeiger für ein automatisches Riemengetriebe (T), das an dem Fahrzeug angebracht und mit einem Endlosriemen (45) versehen ist, der zwischen der mit der Ausgangswelle des Motors verbundenen Antriebsriemenscheibe (15) und der mit der Achse des Antriebsrads verbundenen Abtriebsriemenscheibe (46) verläuft, worin ein Gangänderungsverhältnis durch Verändern der Radien des um die Antriebsriemenscheibe (15) und um die Abtriebsriemenscheibe (46) herumgelegten Endlosriemens (45) gemäß den Betriebszuständen des Fahrzeugs verschoben wird, ferner umfassend ein Betriebszustanderfassungsmittel (S4, S5) zum Erfassen des spezifischen Betriebszustands des Fahrzeugs, ein Gangänderungsverhältniserfassungsmittel (S6) zum Erfassen des tatsächlichen Gangänderungsverhältnisses (R) des Automatikgetriebes, ein Bestimmungsmittel (S7 - S10) zum Bestimmen, dass es die richtige Zeit zum Wechsel des Endlosriemens (45) ist, wenn in dem spezifischen Betriebszustand das tatsächliche Gangänderungsverhältnis (R) ein Referenzgangänderungsverhältnis (R₀), das auf einen Wert vorbestimmt ist, der größer ist als ein vorbestimmtes Gangänderungsverhältnis (R_{T}), überschreitet, sowie ein Anzeigemittel (72) zum Anzeigen des Ergebnisses der Bestimmung des Bestimmungsmittels (S7 - S10).

2. Riemenwechselzeitanzeiger für ein automatisches Riemengetriebe (T) nach Anspruch 1, worin das Bestimmungsmittel (S7 - S10) bestimmt, dass es die richtige Zeit zum Wechseln des Endlosriemens (45) ist, wenn der Zustand, dass das tatsächliche Gangänderungsverhältnis (R) das Referenzgangänderungsverhältnis (R₀) überschreitet, für eine vorbestimmte Zeitdauer (T₀) fortgedauert hat.

3. Riemenwechselzeitanzeiger für ein automatisches Riemengetriebe (T) nach Anspruch 1 oder Anspruch 2, der ferner ein Integrierte-Kilometerleistung-Messmittel (S3) zum Messen der integrierten Kilometerleistung des Fahrzeugs umfasst, worin das Bestimmungsmittel (S7 - S10) bestimmt, dass es die richtige Zeit zum Wechsel des Endlosriemens (45) ist, wenn das tatsächliche Gangänderungsverhältnis (R) das Referenzgangänderungsverhältnis (R₀) überschritten hat oder wenn die integrierte Kilometerleistung (L) eine Referenzstrecke (R₀) überschritten hat.

4. Riemenwechselzeitanzeiger für ein automatisches Riemengetriebe (T) nach einem der Ansprüche 1 bis 3, worin das Referenzgangänderungsverhältnis (R₀) auf der Basis des minimalen vorbestimmten Gangänderungsverhältnisses (R_{T}) bestimmt wird.

## Revendications

1. Appareil indicateur d'un moment de remplacement de courroie destiné à une boîte de vitesse automatique de type à courroie (T), monté sur un véhicule et pourvu d'une courroie sans fin (45) montée entre la poulie d'entraînement (15) reliée à l'arbre de sortie du moteur et la poulie réceptrice (46) reliée à l'axe de la roue motrice, dans lequel un rapport de vitesse de changement est déplacé en changeant les rayons de la courroie sans fin (45) enroulée autour de la poulie d'entraînement (15) et enroulée autour de la poulie réceptrice (46) selon les conditions de fonctionnement du véhicule, comprenant en outre des moyens de détection de condition de fonctionnement (S4, S5) pour détecter les conditions spécifiques de fonctionnement du véhicule, des moyens de détection de rapport de vitesse de changement (S6) pour détecter le rapport de vitesse de changement réel (R) de la boîte de vitesse automatique, des moyens de détermination (S7-S10) pour déterminer que le moment de remplacement de la courroie sans fin (45) adéquat est venu lorsque le rapport de vitesse de changement réel (R) est supérieur à un rapport de vitesse de changement de référence (Rₒ) prédéterminé par une valeur étant plus grande qu'un rapport de vitesse de changement prédéterminé (R_{T}) dans les conditions de fonctionnement spécifiques, et des moyens d'affichage (72) pour afficher le résultat de détermination des moyens de détermination (S7-S10) .

2. Appareil indicateur d'un moment de remplacement de courroie destiné à une boîte de vitesse automatique de type à courroie (T) selon la revendication 1, dans lequel les moyens de détermination (S7-S10) déterminent que le moment de remplacement de la courroie sans fin (45) adéquat est venu lorsque le rapport de vitesse de changement réel (R) est supérieur au rapport de vitesse de changement de référence (Rₒ) poursuivi durant une période de temps imposée (tₒ) .

3. Appareil indicateur d'un moment de remplacement de courroie destiné à une boîte de vitesse automatique de type à courroie (T) selon la revendication 1 ou 2, comprenant en outre des moyens de mesure de millage intégrés (S3) pour mesurer le millage intégré du véhicule, dans lequel les moyens de détermination (S7-S10) déterminent que le moment de remplacement de la courroie sans fin (45) adéquat est venu lorsque le rapport de vitesse de changement réel (R) est supérieur au rapport de vitesse de changement de référence (Rₒ) ou lorsque le millage intégré (L) est supérieur à une distance de référence (Lₒ) .

4. Appareil indicateur d'un moment de remplacement de courroie destiné à une boîte de vitesse automatique de type à courroie (T) selon l'une quelconque des revendications 1 à 3, dans lequel le rapport de vitesse de changement de référence (Rₒ) est déterminé sur la base du rapport de vitesse de changement prédéterminé (R_{T}) minimum.
